# EUROPEAN PATENT SPECIFICATION

(11) **EP 3 500 773 B1**
(45) Date of publication and mention of the grant of the patent: **12.08.2020**
(21) Application number: 17768197.0
(22) Date of filing: 16.08.2017
(51) Int. Cl.: F16G 11/12, A62B 35/00, F16G 11/10

(54) **TENSIONING DEVICE**
SPANNVORRICHTUNG
DISPOSITIF DE TENSION

(30) Priority: 17.08.2016 GB 201614083
(43) Date of publication of application: 26.06.2019
(73) Proprietor: Checkmate Lifting & Safety Ltd, Sheerness, Kent ME12 1PZ (GB)
(72) Inventor: NEWING, William, Sheerness Kent ME12 1PZ (GB); STOCKBRIDGE, Chris, Sheerness Kent ME12 1PZ (GB); AUSTON, Oliver, Sheerness Kent ME12 1PZ (GB)
(74) Representative: Dummett Copp LLP
(86) International application number: PCT/GB2017/052412
(87) International publication number: WO 2018/033729

(56) References cited:
- CH-A- 248 782
- US-A1- 2009 026 023
- US-B1- 6 446 936

## Description

### BACKGROUND

This invention relates to a tensioning device to be used in a horizontal lifeline. In particular, this invention relates to a tensioning device that is installed in a temporary horizontal lifeline system.

It is often necessary to install a temporary horizontal lifeline when a worker is working at height over a significant horizontal span, such that the worker may be in a location remote from an anchor point for fall arrest equipment.

In these situations, a flexible line, in the form of a rope or cable, is suspended between two anchor points at the extremes of the area over which the worker will travel. A worker can then attach their personal fall arrest equipment to the horizontal lifeline to provide protection from falling from a height over the full span of the work area.

It is important that the horizontal lifeline is correctly mounted and tensioned to provide the required fall arrest capability. Accordingly, it is known to attach a first end of the lifeline to a first anchor point, which may be provided on any suitable fixed structure. The second end of the lifeline is fed through a tensioning device, and the tensioning device is attached to a second anchor point, provided on a suitable fixed structure at a distance from the first anchor point.

The lifeline passes around a pulley within the tensioning device, with a free end of the lifeline extending from the device. A locking mechanism within the tensioning device allows the lifeline to be pulled around the pulley in a first direction but grips the lifeline preventing the lifeline being pulled around the pulley in a second, opposite direction.

When installing the horizontal lifeline, it is necessary to ensure that the correct tension is applied to the lifeline by the tensioning device. Typically, however, the tensioning device is operated by rotating the pulley spindle with a suitable spanner or socket carried by the worker. This has a number of disadvantages.

Firstly, the worker may not be carrying the correct size spanner or socket. Secondly, the worker may drop the spanner or socket when installing the tensioning device, which is a significant hazard when the worker is working at height. Thirdly, the worker may over tension the lifeline, such that the lifeline is not able to provide the required amount of energy absorption should a worker connected to the lifeline fall from a height.

US 6 446 936 discloses a safety apparatus which is capable of tensioning a horizontal lifeline while producing an adjustable shock absorber and a gauge or indicator for indicating the amount of tension on the lifeline. A lever is used to rotate a drum in order to tension the lifeline.

US 2009/0026023 discloses a self-locking descender with a disengageable handle. The safety descender includes a pulley for winding a rope. The pulley is coupled to a drive finger operating in conjunction with a mechanism which is controlled by an actuating handle or perform manual release of the rope. The handle is actuated to perform driving of the pulley in rotation.

It is, therefore, an object of the present invention to provide an improved tensioning device for horizontal lifelines that overcomes at least some of the disadvantages of prior art devices.

### SUMMARY OF THE INVENTION

According to a first aspect of the present invention there is provided a tensioning device for a horizontal lifeline comprising:
- a pulley including a drive spindle and a pulley wheel connected to the drive spindle, said lifeline passing, in use, around the pulley wheel;
- a locking member configured to engage, in use, with a part of said lifeline to prevent relative movement of the lifeline with respect to the locking member in a first direction; and
- a handle assembly connected to the drive spindle, the handle assembly being moveable between a first, disengaged position in which rotation of the handle assembly does not cause rotation of the drive spindle and a second, engaged position in which rotation of the handle assembly rotates the drive spindle,
characterised in that:
movement of the handle assembly between the first and second positions is along an axis of the drive spindle, wherein the drive spindle includes a drive shaft section and in the first position the handle assembly is engaged with the drive shaft section and in the second position the handle assembly is not engaged with the drive shaft section and wherein rotation of the drive spindle rotates the pulley to move the lifeline in a second direction relative to the locking member, thereby tensioning the lifeline.

The handle assembly is preferably biased in the first position. In preferred embodiments the pulley is housed in a main body of the tensioning device, and a biasing member is located between the handle assembly and the main body to bias the handle assembly in the first position. The biasing member may be a compression spring.

In preferred embodiments the handle assembly includes a hole for receiving a part of the drive spindle therethrough.

The engagement of the handle assembly with the drive shaft section forms a keyed connection between the handle assembly and the drive spindle. The drive shaft section of the drive spindle may have a square cross-sectional shape, and preferably the handle assembly includes an aperture shaped to engage with the drive shaft section of the drive spindle.

In preferred embodiments the handle assembly comprises a coupling member and an arm, the coupling member being connected to the drive spindle and the arm being pivotally connected to the coupling member. The arm is, therefore, preferably moveable relative to the coupling member between a first, retracted position and a second, extended position. With the arm in the retracted position it is desirable if no part of the arm extends beyond a perimeter of a main body of the tensioning device. When the arm is in the second position a force applied to the arm applies a greater torque to the connection between the coupling member and the drive spindle than the same force applied to the arm in the first position.

Preferably the arm comprises an elongate member having a first end and a second end, the arm being pivotally connected to the coupling member proximate the first end, and the second end being further from the connection between the coupling member and the drive spindle when the arm is in the second position than the first position. In particularly preferred embodiments the pulley is mounted in a main body of the device and, when the arm is in the second position, the second end of the arm extends beyond a perimeter of the main body.

The arm is preferably biased in the first, retracted position. As such a torsion spring may be connected between the arm and the coupling member to bias the arm in the first position.

In some embodiments one of the coupling member and the arm includes a detent and the other one of the coupling member and the arm includes a stop surface, the detent contacting the stop surface to limit relative movement between the arm and the coupling member. Typically the detent and the stop surface are located such that the detent contacts the stop surface when the arm is in the second position. Preferably one of the coupling member and the arm includes a detent and the other one of the coupling member and the arm includes two stop surfaces. In these embodiments the stop surfaces are arranged such that a first stop surface contacts the detent when the arm is in the first position and a second stop surface contacts the detent when the arm is in the second position. Preferably the detent is a post and the or each stop surface is a concave surface configured to contact a circumferential surface of the post.

According to a second aspect of the present invention there is provided a horizontal lifeline system comprising:
- an elongate, flexible lifeline; and
- a tensioning device according to the first aspect of the invention, the lifeline being engaged with and wrapped around the pulley wheel.

The lifeline system preferably further comprises a connector attached to the locking member, the connector being configured for attachment to a fixed anchor point.

In some embodiments the pulley is located between two housing plates and the lifeline enters a space between the housing plates at a first location and exits the space between the housing plates at a second location, such that the lifeline is in contact with the pulley wheel around at least half the circumferential length of the pulley wheel.

According to a third aspect of the present invention there is provided a method of tensioning a horizontal lifeline using a tensioning device according to the first aspect of the invention, the method comprising:
- passing a part of the lifeline around the pulley wheel such that a free end of the lifeline extends from the tensioning device;
- moving the handle assembly from the disengaged position into the engaged position to engage the handle assembly with the drive spindle; and
- with the handle assembly in the engaged position, rotating the handle assembly to rotate the pulley wheel in a direction to increase a tensile force in the lifeline;
wherein movement of the handle assembly between the disengaged and engaged positions is along an axis of the drive spindle; and
wherein the drive spindle includes a drive shaft section and moving the handle assembly into the engaged position forms a keyed connection between the handle assembly and the drive shaft section.

Preferably the handle assembly is biased in the disengaged position and the method comprises applying a force to the handle assembly against the biasing force to move the handle assembly into the engaged position.

Preferably the drive shaft section has a non-circular cross-sectional shape and the method comprises locating at least a part of the drive shaft section in an aperture of the handle assembly having a corresponding non-circular cross-sectional shape.

The handle assembly may comprise a coupling member engaged with the drive spindle and an arm connected to the coupling member. In these embodiments the method comprises moving the arm relative to the coupling member from a first, retracted position to a second, extended position, before applying a force to the arm to rotate the handle assembly. The arm is preferably pivotally connected to the coupling member, and the method may comprise rotating the arm relative to the coupling member until a detent contacts a stop surface to locate the arm in the extended position.

The arm is preferably biased in the retracted position and the method comprises applying a force to the arm against the biasing force to move the arm into the extended position.

### BRIEF DESCRIPTION OF THE DRAWINGS

The invention will now be further described by way of example only and with reference to the accompanying drawings, in which:
Figure 1 is a perspective view of a tensioning device for tensioning a safety line according to a preferred embodiment of the present invention, the tensioning device including a main body and a handle assembly;
Figure 2 is a schematic diagram showing how the tensioning device of Figure 1 is mounted and the path of a lifeline through the device;
Figure 3 is a perspective view from a first side of the tensioning device of Figure 1;
Figure 4 is a perspective view from a second side of the tensioning device of Figure 1;
Figure 5 is a side view of the tensioning device of Figure 1, with the handle assembly in a first, disengaged position;
Figure 6 is a cross-sectional view of the tensioning device of Figure 1 taken along the line A - A, with the handle assembly in a first, disengaged position;
Figure 7 is a side view of the tensioning device of Figure 1, with the handle assembly in a second, engaged position;
Figure 8 is a cross-sectional view of the tensioning device of Figure 1 taken along the line A - A, with the handle assembly in a second, engaged position;
Figure 9 is a view of a part of the tensioning device of Figure 1 showing a pulley wheel for receiving the safety line and a brake mechanism for engaging with the safety line;
Figure 10 is a further view of the pulley wheel and brake mechanism of Figure 9;
Figure 11 shows the handle assembly of the tensioning device engaged with the pulley wheel of Figure 9;
Figure 12 is a cross-sectional view of the handle assembly and pulley wheel of Figure 11 along the line B - B;
Figures 13 and 14 show an arm of the handle assembly of the tensioning device in a first position and a second position respectively;
Figures 15 to 17 show an arm, a biasing member and a coupling member of the handle assembly of Figure 11;
Figure 18 is a view of the handle assembly of the tensioning device of Figure 1;
Figure 19 is a cross-sectional view of a coupling member of the handle assembly of Figure 17 along the line C - C; and
Figure 20 is a perspective view of the pulley wheel of Figure 11.

### DETAILED DESCRIPTION

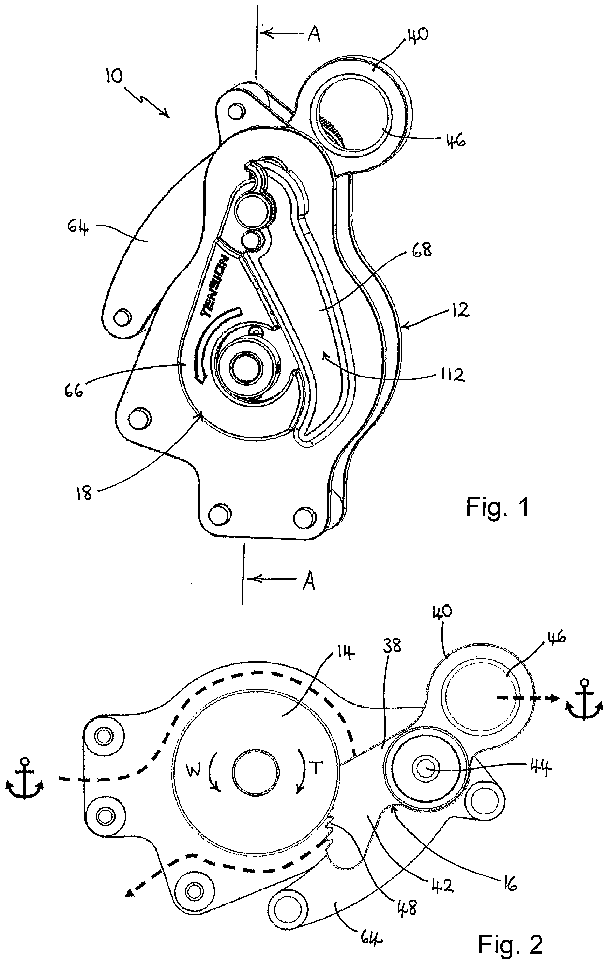

A tensioning device 10 for a horizontal lifeline is illustrated in Figures 1, 3 and 4. The tensioning device 10 comprises a main body 12 housing a pulley 14 and a brake mechanism 16, and a handle assembly 18 operatively connected to the pulley 14.

In use the tensioning device 10 is located and connected between an anchor point, which may comprise a building, frame or suitable stanchion, and a lifeline in the form of an elongate flexible cord or cable. In particular, and as illustrated in Figure 2, a part of the brake mechanism 16 is connected to the anchor point by means of a suitable connector such as a shackle. The lifeline cable enters the tensioning device 10 at a first location, passes around the pulley 14 and a first, free end of the lifeline extends from the device 10 at a second location. This is illustrated by the dashed arrow in Figure 2. The other, second end of the lifeline is connected to a second anchor point at a distance from the first anchor point. Workers working at height connect themselves to the lifeline between the tensioning device 10 and the second anchor point by suitable personal fall arrest equipment.

The tensioning device 10 is operated to apply the required tensile force to the lifeline by rotating the pulley 14 to move the lifeline cable in a tensioning direction (T) such that the length of cable between the free end of the cable and the pulley 14 increases. The brake mechanism 16 is configured to be engaged with the lifeline cable to prevent the cable moving in an opposite withdrawing direction (W) around the pulley. In particular, in the event of a fall of a worker connected to the lifeline, the brake mechanism 16 engages the lifeline cable to prevent the cable being withdrawn from around the pulley 14.

Importantly, the tensioning device 10 of the present invention can be operated to tension the lifeline without the need for separate tools such as a spanner, wrench or similar item. The tensioning device 10 has an integral handle assembly 18 that can be engaged with the pulley 14 to allow the lifeline to be tensioned, and subsequently disengaged from the pulley 14 to prevent unintended movement of the pulley 14 or handle 18 during use of the lifeline.

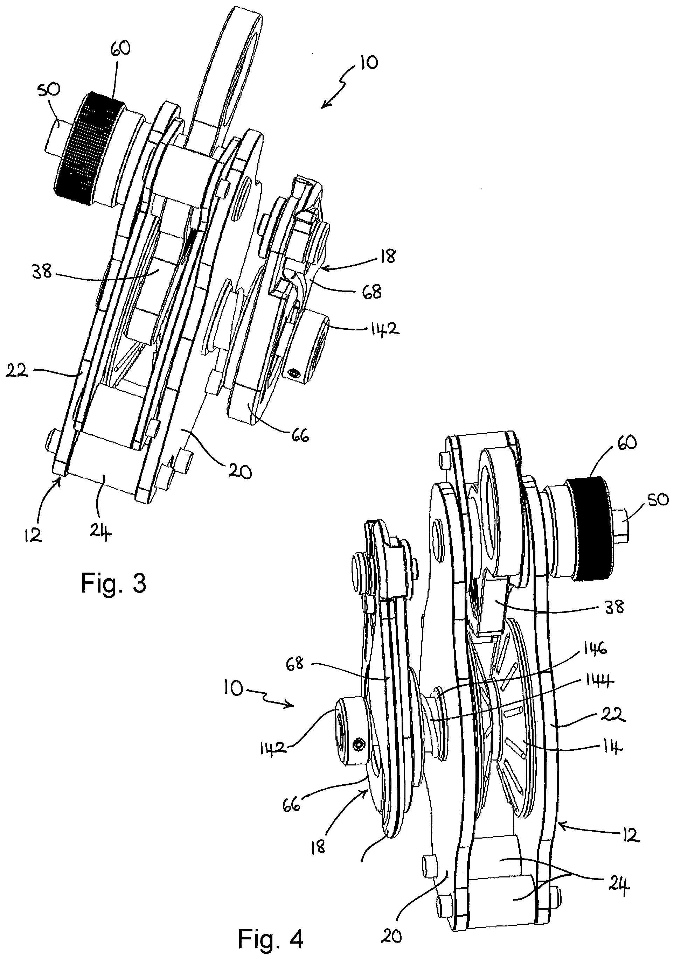

As shown most clearly in Figures 3 to 8, the main body 12 of the tensioning device 10 comprises a pair of housing plates 20, 22 spaced apart a set distance by a plurality of spacers 24 extending between opposing internal surfaces 26 of the plates 20, 22. The pulley wheel 14 is mounted between the housing plates 20, 22 and a drive spindle 28 is connected to the pulley wheel 14 and extends through an aperture 30 in a first or front one of the housing plates 20. The pulley 14 is mounted for rotational movement about the drive spindle 28 and, as such, a rotational axis 32 of the pulley 14 is co-axial with a longitudinal axis 32 of the spindle 28.

The pulley wheel 14 comprises a pair of flanges 34 extending radially outwardly from the spindle 28. The flanges 34 define a groove 36 between them for receiving the lifeline cable (not shown).

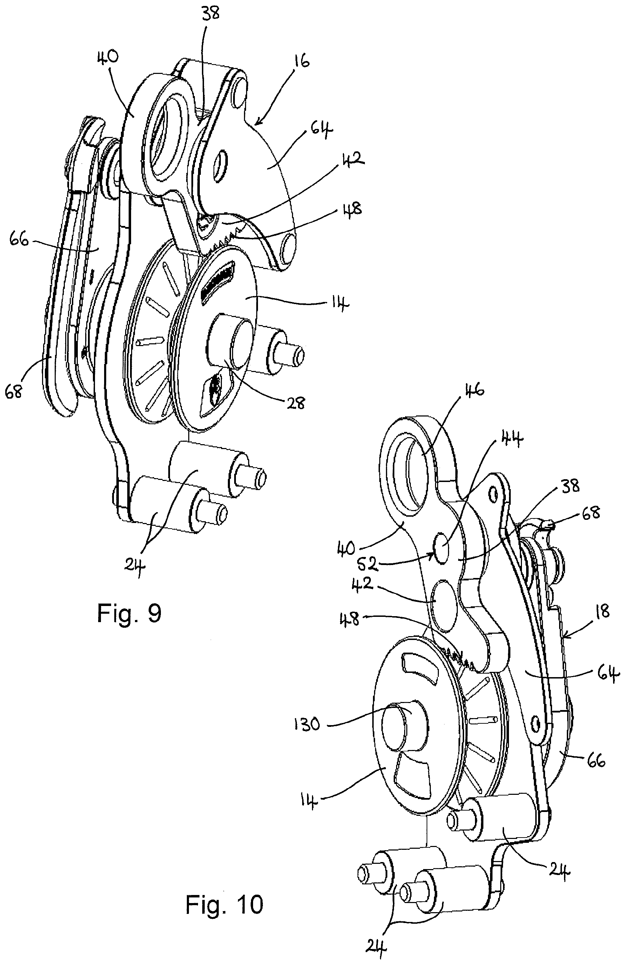

The brake mechanism 16 comprises a locking member 38 (shown most clearly in Figures 9 and 10) pivotally mounted between the housing plates 20, 22. The locking member 38 comprises an anchor arm 40 and a lock arm 42. The anchor arm 40 and lock arm 42 extend in substantially opposite directions from a pivot 44 about which the locking member 38 rotates. The anchor arm 40 includes a connecting eye 46 to which a connector, such as a shackle (not shown), is attached in use. The lock arm 42 includes a toothed cam surface 48 at a distal end of the lock arm 42. Typically the locking member 38 will be a unitary member.

The lock arm 42 extends in a direction towards the pulley wheel 14 and the length of the lock arm 42 is such that the cam surface 48 locates between the flanges 34 of the pulley wheel 14. Furthermore, the toothed cam surface 48 is angled such that, as the lock arm 42 rotates in a first direction, a part of the toothed surface 48 moves radially inwardly towards the axis 32 of the pulley 14.

In use, the toothed surface 48 of the locking member 38 is in contact with a part of the lifeline cable located in the groove 36 of the pulley wheel 14. When an increased force is applied to the lifeline cable, such as due to the fall of a worker, the locking member 38 rotates in the first direction and the toothed surface 48 applies a greater clamping or gripping force to the lifeline cable seated around the pulley wheel 14.

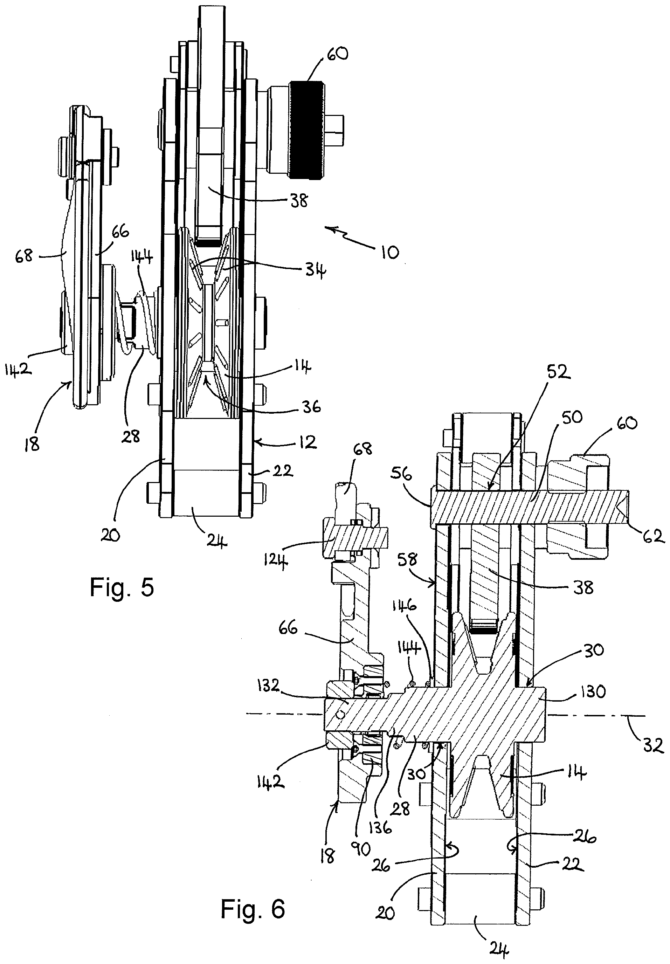

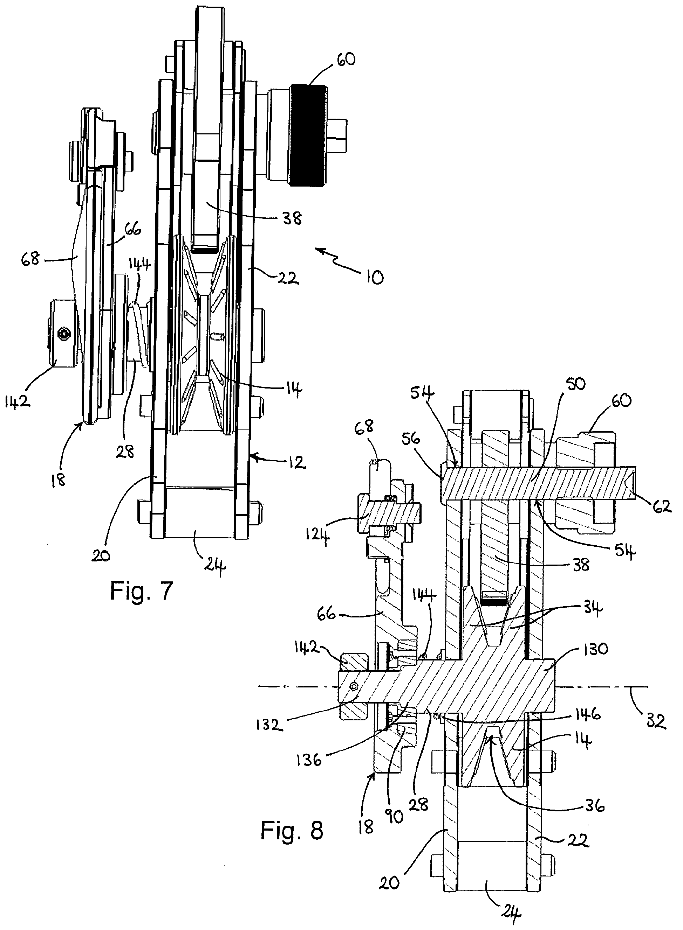

A pin or bolt 50 extends through a hole 52 in the locking member 38 and corresponding holes 54 in the first and second housing plates 20, 22, as shown most clearly in Figures 6 and 8. This pin 50 provides the pivot 44 for the locking member 38. A head 56 of the pin 50 at a first end of the pin 50 contacts an outer surface 58 of the first housing plate 20 and a locking nut 60 is attached to a second end 62 of the pin 50 and is located against an outer surface of the second housing plate 22. The pin 50 and nut 60, therefore, secure the housing plates 20, 22 together and provide the pivot for the brake mechanism 16.

The brake mechanism 16 further comprises a release arm 64 that is operatively connected to the locking member 38. The release arm 64 is rotatable to disengage the lock arm 42 from the lifeline cable.

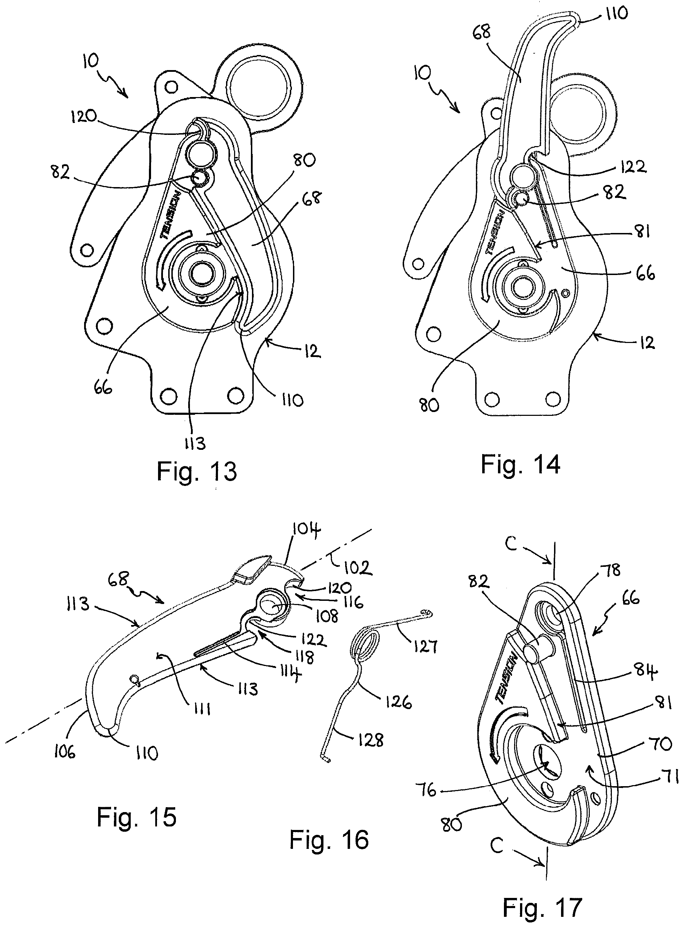

The handle assembly 18 comprises a coupling member 66 and an arm 68. The coupling member 66 is moveably connected to the drive spindle 28 of the pulley 14 and the arm 68 is pivotally connected to the coupling member 66. The coupling member 66, shown most clearly in Figures 17 to 19, comprises a base plate 70 having opposite first and second faces 71, 72. The base plate 70 is elongate in a first direction defining an axis 74 of the coupling member 66. A first hole 76 extends through the base plate 70 in a proximal region of the base plate 70 and a second hole 78 extends through the base plate 70 in a distal region of the base plate 70. Both the first and second holes 76, 78 lie on the axis 74 of the coupling member 66.

A raised guide area 80 protrudes from the first face 71 of the base plate 70 and partially surrounds the first hole 76. A post 82 also extends substantially perpendicularly from the first face 71 and is located between a part of the raised guide area 80 and the second hole 78. In this example the base plate 70 further includes a groove 84 in the first face 71 that extends from the second hole 78.

A boss 86 protrudes from the second face 72 of the base plate 70. The boss 86 includes a star-shaped aperture or recess 88 and is located such that a centre of the aperture 88 is aligned with a centre of the first hole 76.

An insert or socket element 90 is received in the aperture 88 and fixedly connected to the coupling member 66. The insert 90 has a star-shaped perimeter edge 92 that corresponds to the star-shaped aperture 88 in the coupling member 66. The size of the insert 90 is preferably such that there is an interference fit between the perimeter edge 92 of the insert 90 and a side wall 89 of the aperture 88. The insert 90 further comprises a central square-shaped hole 94. When the insert 90 is located in the aperture 88, a centre of the square shaped hole 94 is aligned with the centre of the first hole 76 in the base plate 70. A dimension of the square-shaped hole 94, between opposing side walls, is preferably greater than or equal to the diameter of the first hole 76 in the base plate 70 of the coupling member 66. While in this embodiment the hole 94 is square, it will be appreciated from the following description that the central hole 94 in the insert 90 may be of any suitable non-circular shape, for example rectangular, triangular or an irregular shape.

The coupling member 66 and the insert 90 will typically be made of dissimilar materials and, preferably, the coupling member 66 is made of aluminium and the insert 90 is made of stainless steel. The insert 90, therefore, reinforces the aperture 88 of the coupling member 66.

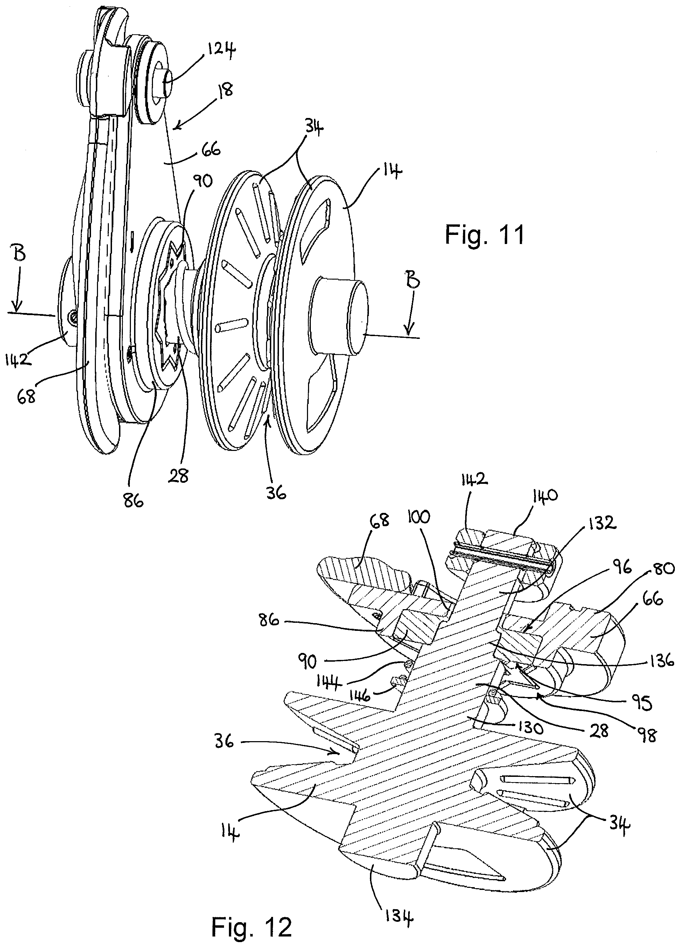

The insert 90 includes opposite first and second faces 95, 96, as shown most clearly in Figure 12. The insert 90 is located in the aperture 88 in the boss 86 such that the first face 95 is flush with a surface 98 of the boss 86. An annular sleeve 100 may extend from the second face 96 of the insert 90. This sleeve 100 may be sized to be received within the first hole 76 of the coupling member 66, such that the sleeve 100 is in contact with and lines a side wall of the hole 76.

The arm 68 of the handle assembly 18 comprises an elongate member, and a longitudinal axis 102 of the arm 68 extends between a proximal end 104 and a distal end 106. The arm 68 has a hole 108 in a proximal end region and, in this embodiment, the distal end 106 of the arm 68 is curved to form a hooked tip 110. The arm 68 has opposite first and second faces 111, 112 and opposite side edges 113. The first face 111 of the arm 68 includes a groove 114 that extends from the hole 108, as shown most clearly in Figure 15. The arm 68 also includes a first notch 116 on a first side of the hole 108 furthest from the tip 110 and a second notch 118 on a second side of the hole 108 closer to the tip 110. Each of the first and second notches 116, 118 provides a corresponding concave stop surface 120, 122, and each of the concave stop surfaces 120, 122 is sized and shaped to contact a circumferential surface of the post 82 of the coupling member 66, when the arm 68 is in a second and a first position respectively.

In this embodiment the arm 68 is pivotally attached to the coupling member 66 by a pin 124 that extends through the hole 108 in the arm 68 and the second hole 78 in the base plate 70 of the coupling member 66. In this embodiment both the coupling member 66 and the arm 68 are made from a suitable plastics material, while the pivot pin 124 is made from a metal material. In other embodiments the arm 68 may be pivotally attached to the coupling member 66 in any suitable way. For example the coupling member 66 may comprise a post or pin that locates through a hole in the arm 68, or vice versa.

The arm 68 is connected to the coupling member 66 so that the first face 111 of the arm 68 opposes or is in contact with the first face 71 of the coupling member 66. With the arm 68 attached to the coupling member 66, the arm 68 is movable between a first, retracted position, shown in Figure 13 and a second, extended position, shown in Figure 14. In the retracted position the second stop surface 122 is in contact with the post 82 of the coupling member 66 and a first side edge 113 of the arm 68 is in contact with an edge 81 of the raised guide area 80. This limits rotation of the arm 68 in a first direction. In this position at least a part of the hooked tip 110 of the arm 68 extends beyond a proximal edge of the coupling member 66 to provide a grip portion that may be gripped by a user to move the arm 68 into the extended position.

In the extended position the first stop surface 120 is in contact with the post 82 and the arm 68 extends from a distal edge of the coupling member 66. This stop surface 120, therefore, limits rotation of the arm 68 in a second, opposite direction. In the extended position the longitudinal axis 102 of the arm 68 is preferably substantially parallel to the axis 74 of the coupling member 66. In this way, with the arm 68 in an extended position, when a force is applied to the tip 110 of the arm 68, the moment or torque at the first hole 76 is greater than if the same force was applied at the distal end of the coupling member 66.

The arm 68 is preferably biased into the first, retracted position. In this example a torsion spring 126 (shown in Figure 14) is located around the pivot pin 124 and between the arm 68 and the coupling member 66. In particular, a first leg 127 of the torsion spring 126 locates in the groove 84 in the coupling member 66 and a second leg 128 of the torsion spring 126 locates in the groove 114 in the arm 68. Biasing the arm 68 in the retracted position means that the arm 68 does not protrude from the main body 12 of the tensioning device 10 when not in use.

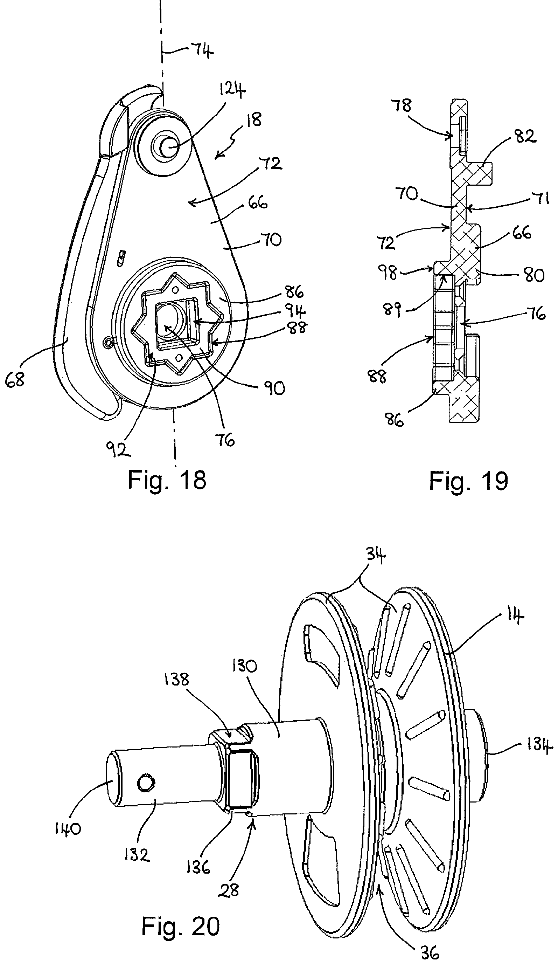

The drive spindle 28 connected to the pulley 14 includes a first shaft section 130 having a circular cross-sectional shape of a first diameter and a second shaft section 132 having a circular cross-sectional shape of a second diameter. The first diameter is larger than the second diameter. As shown in Figure 20, the pulley wheel flanges 34 extend radially from the first shaft section 130. Furthermore, apertures 30 in the housing plates 20, 22 are sized to receive the first shaft section 130. In particular, a first end 134 of the drive spindle 28, at the end of the first shaft section 130, protrudes through an aperture 30 in the second, rear housing plate 22.

Between the first and second shaft sections 130, 132 is a drive shaft section 136 having a square cross-sectional shape. A dimension of the drive shaft section 136 between opposite drive surfaces 138 is greater than or equal to the diameter of the second shaft section 132. A diagonal dimension of the drive shaft section 136 is less than or equal to the diameter of the first shaft section 130. The drive shaft section 136 and the second shaft section 132 extend from the first housing plate 20 in a direction away from the main body 12. An end of the second shaft section 132 defines a second end 140 of the drive spindle 28.

The dimensions of the drive shaft section 136 correspond to the dimensions of the square hole 94 in the insert 90 of the handle assembly 18 such that the drive shaft section 136 can be located in the square hole 94 of the insert 90.

The coupling member 66 of the handle assembly 18 is connected to the main body 12 with the drive spindle 28 extending through the square hole 94 in the insert 90 and the first hole 76 of the base plate 70. The coupling member 66 is oriented such that the second face 72 of the base plate 70 faces towards the first housing plate 20. The coupling member 66 and, therefore, the handle assembly 18 is retained on the drive spindle 28 by a keeper 142 that is secured at the second end 140 of the drive spindle 28.

The handle assembly 18 is moveable axially along the drive spindle 28 between a first, disengaged position shown in Figures 5 and 6 and a second, engaged position shown in Figures 7 and 8. The handle assembly 18 is located nearer the main body 12 when the handle assembly 18 is in the engaged position than in the disengaged position. In the disengaged position the keeper 142 contacts a region of the front face 71 of the base plate 70 of the coupling member 66 surrounding the first hole 76. The drive shaft section 136 of the spindle 28 is located between the handle assembly 18 and the first housing plate 20 and only the second shaft section 132 of the spindle 28 extends through the insert 90 and coupling member 66. In the engaged position the drive shaft section 136 locates in the square shaped hole 94 in the insert 90 and the coupling member 66 is spaced from the keeper 142.

Moving the handle assembly 18 into the engaged position such that the insert 90 locates over and around the drive shaft section 136 therefore forms a keyed connection between the handle assembly 18 and the drive spindle 28 attached to the pulley 14. This keyed connection allows rotation of the handle assembly 18 to be transmitted to the pulley 14 to tension the lifeline. It will, therefore, be appreciated that the drive shaft section 136 may be a shape other than square, but must have a cross-sectional shape that corresponds to a shape of the hole 94 in the insert 90 to allow the formation of a suitable keyed connection.

When the handle assembly 18 is in the disengaged position there is no drive connection between the handle assembly 18 and the drive spindle 28 and, accordingly, rotation of the handle assembly 18 does not cause rotation of the pulley 14.

The handle assembly 18 is preferably biased into the disengaged position. In this embodiment a biasing member 144 in the form of a compression spring 144 is located between the handle assembly 18 and the main body 12. As shown most clearly in Figures 5 to 8, the spring 144 is located around the drive spindle 28 and extends between the first housing plate 20 and the insert 90. An annular reinforcing plate 146 is preferably attached to the first housing plate 20 around the aperture 30, such that a first end of the spring 144 is in contact with or is attached to the reinforcing plate 146. A second end of the spring 144 is in contact with or is attached to the first face 95 of the insert 90.

The spring 144, or other biasing member, urges the handle assembly 18 in a direction away from the main body 12 so that the insert 90 disengages from the drive shaft section 136 of the spindle 28. Movement of the handle assembly 18 in this direction is halted by contact between the coupling member 66 and the keeper 142.

Movement of the handle assembly 18 into the engaged position is limited by the change in shape and dimensions of the first shaft section 130 relative to the drive shaft section 136. The larger diameter of the first shaft section 130 means that this cannot enter the aperture 88 in the insert 90, and movement of the handle assembly 18 is prevented by contact between the first shaft section 130 and the first face 95 of the insert 90. Additionally or alternatively a shoulder region formed by the transition between the drive shaft section 136 and the second shaft section 132 may contact a seat in the insert 90 at an end of the side wall of the aperture 88 furthest from the first face of the insert 90.

In use, with the second housing plate 22 removed, a worker or user of the device 10 threads or wraps an end portion of a lifeline cable around the pulley 14 so that the cable is seated in the groove 36 between the flanges 34. The locking member 38 is then positioned with the lock arm 42 in contact with the lifeline cable, the second housing plate 22 is correctly located with respect to the brake mechanism 16 and pulley 14, and the locking nut 60 tightened to secure the housing plates 20, 22 together and to provide the pivot 44 for the locking member 38.

A connector, such as a shackle, is used to attach the anchor arm 40 of the brake mechanism 16 to a static anchor point. With the remote end of the lifeline cable attached to a second anchor point, the tensioning device 10 can then be operated to apply the required tension to the lifeline cable.

A user engages the handle assembly 18 with the drive spindle 28 by pushing the handle assembly 18 in a direction towards the main body 12 against the force of the biasing member 144. The handle assembly 18 is pushed towards the main body 12 so that the drive shaft section 136 locates in the hole 94 in the insert 90. A user also moves the arm 68 of the handle assembly 18 into the extended position.

The handle assembly 18 is rotated by applying a force to the arm 68 proximate the tip 110. The force is transmitted from the arm 68 to the coupling member 66 by contact between the first stop surface 120 and the post 82. Because the force is transmitted by this contact, the handle assembly 18 can only be rotated in one direction by applying a force to the arm 68. Rotation of the arm 68 and coupling member 66 causes rotation of the drive spindle 28 due to the engagement between the insert 90 and the drive shaft section 136. The pulley 14 is rotated so as to move the cable in the tensioning direction (T) until the required tensile force is applied to the lifeline cable.

When a user releases his grip on the handle assembly 18 the arm 68 is biased to automatically return to the retracted position and the handle assembly 18 is biased to automatically return to the disengaged position.

The tensioning device 10 of the present invention, therefore, has the advantage that the lifeline cable may be tensioned with an integral handle assembly 18 and does not require the use of additional, separate tools which may be lost, forgotten or dropped. The length of the handle assembly 18 in the extended position is such that at least a part of the arm 68 extends beyond a perimeter edge of the main body 12 of the device 10 allowing a user to fully rotate the handle 18. Retraction of the arm 68 after use, such that the handle assembly 18 does not extend beyond the perimeter edge of the main body 12, reduces the chance of something or someone catching or snagging on the handle 18. The length of the handle assembly 18 in the extended position is also, preferably, such that a user does not over tension the lifeline cable.

## Claims

1. A tensioning device (10) for a horizontal lifeline comprising:
a pulley (14) including a drive spindle (28) and a pulley wheel (14) connected to the drive spindle (28), said lifeline passing, in use, around the pulley wheel (14);
a locking member (38) configured to engage, in use, with a part of said lifeline to prevent relative movement of the lifeline with respect to the locking member (38) in a first direction; and
a handle assembly (18) connected to the drive spindle (28), the handle assembly (18) being moveable between a first, disengaged position in which rotation of the handle assembly (18) does not cause rotation of the drive spindle (28) and a second, engaged position in which rotation of the handle assembly (18) rotates the drive spindle (28),
**characterised in that**:
movement of the handle assembly (18) between the first and second positions is along an axis of the drive spindle (28), wherein the drive spindle (28) includes a drive shaft section (136) and in the first position the handle assembly (18) is engaged with the drive shaft section (136) and in the second position the handle assembly (18) is not engaged with the drive shaft section (136), and wherein rotation of the drive spindle (28) rotates the pulley (14) to move the lifeline in a second direction relative to the locking member (38), thereby tensioning the lifeline.

2. A tensioning device as claimed in Claim 1, wherein the pulley (14) is housed in a main body (12) of the tensioning device (10), and a biasing member (144) is located between the handle assembly (18) and the main body (12) to bias the handle assembly (18) in the first position.

3. A tensioning device as claimed in Claim 1 or Claim 2, the handle assembly (18) comprising a coupling member (66) and an arm (68), the coupling member (66) being connected to the drive spindle (28) and the arm (68) being pivotally connected to the coupling member (66).

4. A tensioning device as claimed in Claim 3, wherein the arm (68) is moveable relative to the coupling member (66) between a first, retracted position and a second, extended position, and wherein when the arm (68) is in the second position a force applied to the arm (68), in use, applies a greater torque to the connection between the coupling member (66) and the drive spindle (28) than the same force applied to the arm (68) in the first position.

5. A tensioning device as claimed in Claim 3 or Claim 4, wherein the arm (68) comprises an elongate member having a first end (104) and a second end (106), the arm (68) being pivotally connected to the coupling member (66) proximate the first end (104), and the second end (106) being further from the connection between the coupling member (66) and the drive spindle (28) when the arm (68) is in the second position than the first position and wherein the pulley (14) is mounted in a main body (12) of the device (10) and, when the arm (68) is in the second position, the second end (106) of the arm (68) extends beyond a perimeter of the main body (12).

6. A tensioning device as claimed in any one of Claims 3 to 5, wherein the arm (68) is biased in the first position.

7. A tensioning device as claimed in any one of Claims 3 to 6, wherein one of the coupling member (66) and the arm (68) includes a detent (82) and the other one of the coupling member (66) and the arm (68) includes a stop surface (120,122), the detent (82) contacting the stop surface (120,122) to limit relative movement between the arm (68) and the coupling member (66) and wherein the detent (82) contacts the stop surface (120,122) when the arm (68) is in the second position.

8. A tensioning device as claimed in Claim 7, wherein one of the coupling member (66) and the arm (68) includes a detent (82) and the other one of the coupling member (66) and the arm (68) includes two stop surfaces (120,122), the stop surfaces (120,122) being arranged such that a first stop surface (120) contacts the detent (82) when the arm (68) is in the first position and a second stop surface (122) contacts the detent (82) when the arm (68) is in the second position.

9. A horizontal lifeline system comprising:
an elongate, flexible lifeline; and
a tensioning device (10) as claimed in any one of Claims 1 to 8, the lifeline being engaged with and wrapped around the pulley wheel (14).

10. A horizontal lifeline system as claimed in Claim 9, further comprising a connector attached to the locking member (38), the connector being configured for attachment to a fixed anchor point.

11. A horizontal lifeline system as claimed in Claim 9 or Claim 10, wherein the pulley (14) is located between two housing plates (20,22) and the lifeline enters a space between the housing plates (20,22) at a first location and exits the space between the housing plates (20,22) at a second location, such that the lifeline is in contact with the pulley wheel (14) around at least half the circumferential length of the pulley wheel (14).

12. A horizontal lifeline system as claimed in any one of Claims 9 to 11, further comprising a release arm (64) rotatable to selectively disengage the locking member (38) from the lifeline.

13. A method of tensioning a horizontal lifeline using a tensioning device (10) as claimed in any one of Claims 1 to 8, the method comprising:
passing a part of the lifeline around the pulley wheel (14) such that a free end of the lifeline extends from the tensioning device (10);
moving the handle assembly (18) from the disengaged position into the engaged position to engage the handle assembly (18) with the drive spindle (28);
with the handle assembly (18) in the engaged position, rotating the handle assembly (18) to rotate the pulley wheel(14) in a direction to increase a tensile force in the lifeline;
wherein movement of the handle assembly (18) between the disengaged and engaged positions is along an axis of the drive spindle (28); and
wherein the drive spindle (28) includes a drive shaft section (136), and moving the handle assembly (18) into the engaged position forms a keyed connection between the handle assembly (18) and the drive shaft section (136).

14. A method as claimed in Claim 13, wherein the handle assembly (18) is biased in the disengaged position and the method comprising applying a force to the handle assembly (18) against the biasing force to move the handle assembly (18) into the engaged position.

15. A method as claimed in any one of Claims 13 to 14, wherein the handle assembly (18) comprises a coupling member (66) engaged with the drive spindle (28) and an arm (68) connected to the coupling member (66), and the method comprises moving the arm (68) relative to the coupling member (66) from a first, retracted position to a second, extended position, before applying a force to the arm (68) to rotate the handle assembly (18).

## Patentansprüche

1. Spannvorrichtung (10) für eine in horizontaler Richtung verlaufende Rettungsleine, umfassend:
eine Seilscheibenvorrichtung (14), welche eine Antriebsspindel (28) und eine mit der Antriebsspindel (28) verbundene Seilscheibe (14) umfasst, wobei die Rettungsleine im Gebrauchszustand um die Seilscheibe (14) herumgeführt ist;
ein Verriegelungselement (38), welches dazu eingerichtet ist, im Gebrauchszustand mit einem Teil der Rettungsleine zusammenzugreifen, um eine relative Bewegung der Rettungsleine bezüglich des Verriegelungselements (38) in einer ersten Richtung zu verhindern; und
eine Griffanordnung (18), die mit der Antriebsspindel (28) verbunden ist, wobei die Griffanordnung (18) zwischen einer ersten Nichteingriffsposition, in welcher die Drehung der Griffanordnung (18) keine Drehung der Antriebsspindel (28) bewirkt, und einer zweiten Eingriffsposition bewegbar ist, in welcher die Drehung der Griffanordnung (18) die Antriebsspindel (28) dreht,
**dadurch gekennzeichnet,**
**dass** die Bewegung der Griffanordnung (18) zwischen der ersten Position und der zweiten Position entlang einer Achse der Antriebsspindel (28) erfolgt, wobei die Antriebsspindel (28) einen Antriebswellenabschnitt (136) aufweist und die Griffanordnung (18) in der ersten Position mit dem Antriebswellenabschnitt (136) zusammengreift und die Griffanordnung (18) in der zweiten Position mit dem Antriebswellenabschnitt (136) nicht zusammengreift, und wobei die Drehung der Antriebsspindel (28) die Seilscheibenvorrichtung (14) dreht, um die Rettungsleine in einer zweiten Richtung relativ zum Verriegelungselemente (38) zu bewegen, wodurch die Rettungsleine gespannt wird.

2. Spannvorrichtung nach Anspruch 1,
bei welcher die Seilscheibenvorrichtung (14) in einem Grundkörper (12) der Spannvorrichtung (10) untergebracht ist und sich ein Vorspannelement (144) zwischen der Griffanordnung (18) und dem Grundkörper (12) befindet, um die Griffanordnung (18) in der ersten Position vorzuspannen.

3. Spannvorrichtung nach Anspruch 1 oder Anspruch 2,
wobei die Griffanordnung (18) ein Kopplungselement (66) und einen Hebel (68) umfasst, wobei das Kopplungselement (66) mit der Antriebsspindel (28) verbunden ist und der Hebel (68) schwenkbar mit dem Kopplungselement (66) verbunden ist.

4. Spannvorrichtung nach Anspruch 3,
bei welcher der Hebel (68) relativ zum Kopplungselement (66) zwischen einer ersten zurückgezogenen Position und einer zweiten ausgefahrenen Position bewegbar ist, und wobei, wenn der Hebel (68) sich in der zweiten Position befindet, eine auf den Hebel (68) ausgeübte Kraft im Gebrauchszustand ein größeres Drehmoment auf die Verbindung zwischen dem Kopplungselement (66) und der Antriebsspindel (28) ausübt als es dieselbe auf den Hebel (68) wirkende Kraft in der ersten Position täte.

5. Spannvorrichtung nach Anspruch 3 oder Anspruch 4,
bei welcher der Hebel (68) ein längliches Element mit einem ersten Ende (104) und einem zweiten Ende (106) umfasst, wobei der Hebel (68) schwenkbar mit dem Kopplungselement (66) in der Nähe des ersten Endes (104) verbunden ist, und wobei das zweite Ende (106) weiter von der Verbindung zwischen dem Kopplungselement (66) und der Antriebsspindel (28) entfernt liegt, wenn der Hebel (68) sich in der zweiten Position befindet, als dies in der ersten Position der Fall wäre, und wobei die Seilscheibenvorrichtung (14) in einem Grundkörper (12) der Vorrichtung (10) montiert ist und, wenn der Hebel (68) sich in der zweiten Position befindet, das zweite Ende (106) des Hebels (68) sich über einen Rand des Grundkörpers (12) hinaus erstreckt.

6. Spannvorrichtung nach einem der Ansprüche 3 - 5,
bei welcher der Hebel (68) in der ersten Position vorgespannt ist.

7. Spannvorrichtung nach einem der Ansprüche 3 - 6,
bei welcher das Kopplungselement (66) oder der Hebel (68) ein Sperrstück (82) aufweist und entsprechend der Hebel (68) oder das Kopplungselement (66) eine Anschlagfläche (120, 122) aufweist, wobei das Sperrstück (82) die Anschlagfläche (120, 122) kontaktiert, um die relative Bewegung zwischen dem Hebel (68) und dem Kopplungselement (66) zu begrenzen, und wobei das Sperrstück (82) die Anschlagfläche (120, 122) berührt, wenn der Hebel (68) sich in der zweiten Position befindet.

8. Spannvorrichtung nach Anspruch 7,
bei welcher das Kopplungselement (66) oder der Hebel (68) ein Sperrstück (82) aufweist und entsprechend der Hebel (68) oder das Kopplungselement (66) zwei Anschlagflächen (120, 122) aufweist, wobei die Anschlagflächen (120, 122) derart angeordnet sind, dass eine erste Anschlagfläche (120) das Sperrstück (82) berührt, wenn der Hebel (68) sich in der ersten Position befindet, und eine zweite Anschlagfläche (122) das Sperrstück (82) berührt, wenn der Hebel (68) sich in der zweiten Position befindet.

9. Ein System mit horizontaler Rettungsleine, umfassend:
eine längliche, flexible Rettungsleine; und
eine Spannvorrichtung (10) nach einem der Ansprüche 1 - 8, wobei die Rettungsleine mit der Seilscheibe (14) zusammengreift und darum geführt ist.

10. System mit horizontaler Rettungsleine nach Anspruch 9, weiter umfassend einen Verbinder, der an dem Verriegelungselement (38) angebracht ist, wobei der Verbinder zur Anbringung an einem festen Verankerungspunkt eingerichtet ist.

11. System mit horizontaler Rettungsleine nach Anspruch 9 oder Anspruch 10,
bei welchem die Seilscheibenvorrichtung (14) sich zwischen zwei Gehäuseplatten (20, 22) befindet und die Rettungsleine derart in einen Zwischenraum zwischen den Gehäuseplatten (20, 22) an einer ersten Stelle eintritt und derart aus dem Zwischenraum zwischen den Gehäuseplatten (20, 22) an einer zweiten Stelle austritt, dass die Rettungsleine sich im Kontakt mit der Seilscheibe (14) um wenigstens den halben Umfang der Seilscheibe (14) befindet.

12. System mit horizontaler Rettungsleine nach einem der Ansprüche 9 - 11,
welche weiter einen Lösehebel (64) umfasst, welcher drehbar gelagert ist, um selektiv das Verriegelungselement (38) von der Rettungsleine zu lösen.

13. Verfahren zum Spannen einer horizontalen Rettungsleine, bei welchem eine Spannvorrichtung (10) nach einem der Ansprüche 1 - 8 eingesetzt wird, wobei das Verfahren folgendes umfasst::
es wird ein Teil einer Rettungsleine um eine Seilscheibe (14) derart herumgeführt, dass sich ein freies Ende der Rettungsleine von der Spannvorrichtung (10) aus erstreckt;
die Griffanordnung (18) wird aus der Nichteingriffsposition in die Eingriffsposition bewegt, um die Griffanordnung (18) mit der Antriebsspindel (28) in Eingriff zu bringen;
mit der Griffanordnung (18) in der Eingriffsposition wird die Griffanordnung (18) gedreht, um die Seilscheibe (14) in eine Richtung zu drehen, um die Spannkraft in der Rettungsleine zu erhöhen;
wobei die Bewegung der Griffanordnung (18) zwischen der Nichteingriffsposition und der Eingriffsposition entlang einer Achse der Antriebsspindel (28) erfolgt;
und wobei die Antriebsspindel (28) einen Antriebswellenab-schnitt (136) aufweist, und
das Bewegen der Griffanordnung (18) in die Eingriffsposition eine formschlüssige Verbindung zwischen der Griffanordnung (18) und im Antriebswellenabschnitt (136) bildet.

14. Verfahren nach Anspruch 13,
bei welchem die Griffanordnung (18) in der Nichteingriffsposition vorgespannt ist und das Verfahren umfasst, dass eine Kraft auf die Griffanordnung (18) gegen die Vorspannkraft ausgeübt wird, um die Griffanordnung (18) in die Eingriffsposition zu bewegen.

15. Verfahren nach einem der Ansprüche 13 - 14,
bei welchem die Griffanordnung (18) ein Kopplungselement (66), welches mit der Antriebsspindel (28) zusammengreift, und einen Hebel (68) umfasst, der mit dem Kopplungselement (66) verbunden ist, und wobei das Verfahren umfasst, dass der Hebel (68) relativ zum Kopplungselement (66) aus einer ersten zurückgezogenen Position in eine zweite ausgefahrene Position bewegt wird, bevor auf den Hebel (68) eine Kraft ausgeübt wird, um die Griffanordnung (18) zu drehen.

## Revendications

1. Dispositif de mise en tension (10) pour un câble de sûreté horizontal, comprenant :
une poulie (14) comprenant une broche d'entraînement (28) et une roue de poulie (14) reliée à la broche d'entraînement (28), ledit câble de sûreté passant, en utilisation, autour de la roue de poulie (14) ;
un élément de verrouillage (38) configuré pour s'engager, en utilisation, avec une partie dudit câble de sûreté pour empêcher un mouvement relatif du câble de sûreté par rapport à l'élément de verrouillage (38) dans une première direction ; et
un ensemble poignée (18) relié à la broche d'entraînement (28), l'ensemble poignée (18) étant mobile entre une première position, désengagée, dans laquelle une rotation de l'ensemble poignée (18) n'entraîne pas une rotation de la broche d'entraînement (28), et une seconde position, engagée, dans laquelle une rotation de l'ensemble poignée (18) fait tourner la broche d'entraînement (28),
**caractérisé par le fait que** :
un mouvement de l'ensemble poignée (18) entre les première et seconde positions se fait le long d'un axe de la broche d'entraînement (28), la broche d'entraînement (28) comprenant une section arbre d'entraînement (136) et, dans la première position, l'ensemble poignée (18) étant engagé avec la section arbre d'entraînement (136) et, dans la seconde position, l'ensemble poignée (18) n'étant pas engagé avec la section arbre d'entraînement (136), et une rotation de la broche d'entraînement (28) faisant tourner la poulie (14) pour déplacer le câble de sûreté dans une seconde direction par rapport à l'élément de verrouillage (38), mettant ainsi en tension le câble de sûreté.

2. Dispositif de mise en tension selon la revendication 1, dans lequel la poulie (14) est reçue dans un corps principal (12) du dispositif de mise en tension (10), et un élément de sollicitation (144) est situé entre l'ensemble poignée (18) et le corps principal (12) pour solliciter l'ensemble poignée (18) dans la première position.

3. Dispositif de mise en tension selon la revendication 1 ou la revendication 2, l'ensemble poignée (18) comprenant un élément d'accouplement (66) et un bras (68), l'élément d'accouplement (66) étant relié à la broche d'entraînement (28) et le bras (68) étant relié de manière pivotante à l'élément d'accouplement (66).

4. Dispositif de mise en tension selon la revendication 3, dans lequel le bras (68) est mobile par rapport à l'élément d'accouplement (66) entre une première position, rétractée, et une seconde position, étendue, et dans lequel, lorsque le bras (68) est dans la seconde position, une force appliquée au bras (68), en utilisation, applique un plus grand couple à la liaison entre l'élément d'accouplement (66) et la broche d'entraînement (28), que la même force appliquée au bras (68) dans la première position.

5. Dispositif de mise en tension selon la revendication 3 ou la revendication 4, dans lequel le bras (68) comprend un élément allongé ayant une première extrémité (104) et une seconde extrémité (106), le bras (68) étant relié de manière pivotante à l'élément d'accouplement (66) à proximité de la première extrémité (104), et la seconde extrémité (106) étant plus éloignée de la liaison entre l'élément d'accouplement (66) et la broche d'entraînement (28) lorsque le bras (68) est dans la seconde position que lorsqu'il est dans la première position, et la poulie (14) étant montée dans un corps principal (12) du dispositif (10) et, lorsque le bras (68) est dans la seconde position, la seconde extrémité (106) du bras (68) s'étendant au-delà d'un périmètre du corps principal (12).

6. Dispositif de mise en tension selon l'une quelconque des revendications 3 à 5, dans lequel le bras (68) est sollicité dans la première position.

7. Dispositif de mise en tension selon l'une quelconque des revendications 3 à 6, dans lequel l'un parmi l'élément d'accouplement (66) et le bras (68) comprend un ergot (82) et l'autre parmi l'élément d'accouplement (66) et le bras (68) comprend une surface d'arrêt (120, 122), l'ergot (82) entrant en contact avec la surface d'arrêt (120, 122) pour limiter un mouvement relatif entre le bras (68) et l'élément d'accouplement (66), et l'ergot (82) entrant en contact avec la surface d'arrêt (120, 122) lorsque le bras (68) est dans la seconde position.

8. Dispositif de mise en tension selon la revendication 7, dans lequel l'un parmi l'élément d'accouplement (66) et le bras (68) comprend un ergot (82) et l'autre parmi l'élément d'accouplement (66) et le bras (68) comprend deux surfaces d'arrêt (120, 122), les surfaces d'arrêt (120, 122) étant disposées de telle sorte qu'une première surface d'arrêt (120) entre en contact avec l'ergot (82) lorsque le bras (68) est dans la première position et qu'une seconde surface d'arrêt (122) entre en contact avec l'ergot (82) lorsque le bras (68) est dans la seconde position.

9. Système de câble de sûreté horizontal comprenant :
un câble de sûreté flexible allongé ; et
un dispositif de mise en tension (10) selon l'une quelconque des revendications 1 à 8, le câble de sûreté étant engagé avec la roue de poulie (14) et enroulé autour de celle-ci.

10. Système de câble de sûreté horizontal selon la revendication 9, comprenant en outre un connecteur fixé à l'élément de verrouillage (38), le connecteur étant configuré pour une fixation à un point d'ancrage fixe.

11. Système de câble de sûreté horizontal selon la revendication 9 ou la revendication 10, dans lequel la poulie (14) est située entre deux plaques de boîtier (20, 22) et le câble de sûreté entre dans un espace entre les plaques de boîtier (20, 22) à un premier emplacement et sort de l'espace entre les plaques de boîtier (20, 22) à un second emplacement, de telle sorte que le câble de sûreté est en contact avec la roue de poulie (14) autour d'au moins la moitié de la longueur circonférentielle de la roue de poulie (14).

12. Système de câble de sûreté horizontal selon l'une quelconque des revendications 9 à 11, comprenant en outre un bras de déverrouillage (64) apte à tourner pour désengager de manière sélective l'élément de verrouillage (38) du câble de sûreté.

13. Procédé de mise en tension d'un câble de sûreté horizontal à l'aide d'un dispositif de mise en tension (10) selon l'une quelconque des revendications 1 à 8, le procédé comprenant :
faire passer une partie du câble de sûreté autour de la roue de poulie (14) de telle sorte qu'une extrémité libre du câble de sûreté s'étend à partir du dispositif de tension (10) ;
déplacer l'ensemble poignée (18) de la position désengagée à la position engagée pour engager l'ensemble poignée (18) avec la broche d'entraînement (28) ;
avec l'ensemble poignée (18) dans la position engagée, faire tourner l'ensemble poignée (18) pour faire tourner la roue de poulie (14) dans une direction pour accroître une force de tension dans le câble de sûreté ;
un mouvement de l'ensemble poignée (18) entre les positions désengagée et engagée étant effectué le long d'un axe de la broche d'entraînement (28) ; et
la broche d'entraînement (28) comprenant une section arbre d'entraînement (136), et le déplacement de l'ensemble poignée (18) jusqu'à la position engagée formant une liaison clavetée entre l'ensemble poignée (18) et la section arbre d'entraînement (136).

14. Procédé selon la revendication 13, dans lequel l'ensemble poignée (18) est sollicité dans la position désengagée et le procédé comprenant appliquer une force à l'ensemble poignée (18) à l'encontre de la force de sollicitation pour déplacer l'ensemble poignée (18) jusqu'à la position engagée.

15. Procédé selon l'une quelconque des revendications 13 à 14, dans lequel l'ensemble poignée (18) comprend un élément d'accouplement (66) engagé avec la broche d'entraînement (28) et un bras (68) relié à l'élément d'accouplement (66), et le procédé comprend déplacer le bras (68) par rapport à l'élément d'accouplement (66) d'une première position, rétractée, à une seconde position, étendue, avant d'appliquer une force au bras (68) pour faire tourner l'ensemble poignée (18).
